Europäisches Patentamt

European Patent Office

Office européen des brevets

(19)

(11) Veröffentlichungsnummer: **0 075 148**
A2

(12) **EUROPÄISCHE PATENTANMELDUNG**

(21) Anmeldenummer: **82108036.3**

(22) Anmeldetag: **01.09.82**

(51) Int. Cl.³: **B 23 B 29/04**

(30) Priorität: **19.09.81 DE 3137427**

(43) Veröffentlichungstag der Anmeldung: **30.03.83**
**Patentblatt 83/13**

(84) Benannte Vertragsstaaten: **CH FR GB IT LI**

(71) Anmelder: **Fried. Krupp Gesellschaft mit beschränkter Haftung, Altendorfer Strasse 103, D-4300 Essen 1 (DE)**

(72) Erfinder: **Buchmann, Kurt, Baltrumweg 2, D-4300 Essen 1 (DE)**

(54) **Vorrichtung zur spanabhebenden Bearbeitung von Werkstücken.**

(57) Es wird eine Vorrichtung zur spanabhebenden Bearbeitung metallischer und nichtmetallischer Werkstücke vorgeschlagen, die aus einem Werkzeughalter (1), einem verfahrbaren Spreizzylinder (2) und einem Magazin (3) besteht, wobei in einer Ausnehmung (4) des Werkzeughalters (1) durch ein Spannelement ein Werkzeugträger (6) befestigt ist, der eine zur Aufnahme des Spreizzylinders (2) bestimmte Bohrung (7) besitzt und in einer Ausnehmung (8) einen durch ein Spannglied (9) befestigten Schneidkörper (10) aufweist, und wobei das Magazin (3) mehrere Plätze (11) zur Aufnahme von Werkzeugträgern (6) hat, die jeweils mit einem Schneidkörper (10) ausgerüstet sind.

- 1 -

FRIED. KRUPP GESELLSCHAFT MIT BESCHRÄNKTER HAFTUNG

in Essen

Vorrichtung zur spanabhebenden Bearbeitung von Werkstücken

Die Erfindung betrifft eine Vorrichtung zur spanabhebenden Bearbeitung metallischer und nichtmetallischer Werkstücke, die insbesondere zum Außen- und Innendrehen auf Werkzeugmaschinen eingesetzt wird.

In der DE-OS 3 007 440 wurde bereits eine Werkzeugeinrichtung für die spanabhebende Innen- und Außenbearbeitung metallischer Werkstücke vorgeschlagen, die aus einem Werkzeughalter, einem Werkzeugträger und einem Schneidkörper - dem eigendlichen Werkzeug - besteht und bei der Werkzeughalter und Werkzeugträger mittels mechanisch bewegter Spannelemente (ein Spannbolzen und mehrere Spannstifte) über einen zylindrischen Einpaß verbunden sind, wobei das Lösen bzw. Festsetzen der Spannelemente manuell oder maschinell erfolgen kann. In dieser bekannten Werkzeugeinrichtung kommen unterschiedliche Werkzeuge, insbesondere Bohrer und Wendeschneidplatten, zum Einsatz, die jeweils auf einem Werkzeugträger montiert sind. Der Werkzeugwechsel kann in der Weise erfolgen, daß der mit einem bestimmten Werkzeug versehene Werkzeugträger maschinell gelöst, mittels eines automatisch gesteuerten Greifers abgenommen und durch einen anderen Werkzeugträger, der ein weiteres Werkzeug aufweist, ersetzt wird.

- 2 -

Die bekannte Werkzeugeinrichtung hat den Nachteil, daß die verschiedenen Werkzeugträger im Verhältnis zum Werkzeug zu groß sind und nicht in der gewünschten Weise verkleinert werden können, da der Wechsel kleiner Werkzeugträger mit einem automatisch gesteuerten Greifer nicht mit der notwendigen Sicherheit und Reproduzierbarkeit möglich ist. Der Erfindung liegt daher die Aufgabe zugrunde, eine Werkzeugeinrichtung zur Bearbeitung metallischer und nichtmetallischer Werkstücke zu schaffen, die Werkzeugträger hat, deren Größe die Größe der Werkzeuge nur wenig übersteigt und die im automatischen Betrieb sicher gewechselt sowie sehr genau positioniert werden können.

Die der Erfindung zugrundeliegende Aufgabe wird durch die Schaffung einer Vorrichtung gelöst, die aus einem Werkzeughalter, einem verfahrbaren Spreizzylinder und einem Magazin besteht, wobei in einer Ausnehmung des Werkzeughalters durch ein Spannelement ein Werkzeugträger befestigt ist, der eine zur Aufnahme des Spreizzylinders bestimmte Bohrung besitzt und in einer Ausnehmung einen durch ein Spannglied befestigten Schneidkörper aufweist, und wobei das Magazin mehrere Plätze zur Aufnahme von Werkzeugträgern hat, die jeweils mit einem Schneidkörper ausgerüstet sind. Die entsprechend der Erfindung gestaltete Vorrichtung erlaubt einen sicheren und schnellen automatischen Werkzeugwechsel sowie die Verwendung verschiedener Werkzeuge für unterschiedliche Arbeitsaufgaben. Dadurch, daß die Werkzeugträger nach der Erfindung gegenüber den bekannten Werkzeugträgern besonders klein sind, können sie sowohl auf Bohrstangen für das Innendrehen als auch auf Werkzeughaltern für das Außendrehen, die gebräuchliche Ab-

0075148

messungen haben, untergebracht werden, wodurch die erfindungsgemässe Vorrichtung eine große Anwendungsbreite erhält. Durch die Verwendung besonders kleiner Werkzeugträger wird eine optimale Steifigkeit der gesamten Vorrichtung erreicht, was den Wirkungsgrad der Werkzeugmaschine positiv beeinflusst und das Werkzeugsystem erheblich verbilligt. Die besonders vorteilhaften Wirkungen der erfindungsgemässen Vorrichtung beruhen letztlich darauf, daß der Einsatz eines Spreizzylinders beim Werkzeugwechsel eine signifikante, nicht vorhersehbare Verkleinerung des Werkzeugträgers ermöglicht hat.

In weiterer Ausgestaltung der Erfindung ist vorgesehen, daß in der Ausnehmung des Werkzeugträgers eine Auflageplatte und in der Ausnehmung des Werkzeughalters ein Auflagestück angeordnet ist, auf der sich der Schneidkörper bzw. auf dem sich der Werkzeugträger abstützt. Die Auflageplatte und das Auflagestück können nach Verschleiß oder Beschädigung leicht ausgewechselt werden und verleihen dadurch dem Werkzeughalter und dem Werkzeugträger eine nahezu unbegrenzt lange Lebensdauer.

Nach der Erfindung ist ferner vorgesehen, daß in die zur Aufnahme des Spreizzylinders bestimmte Bohrung auch das der Befestigung des Werkzeugträgers im Werkzeughalter dienende Spannelement eingreift. Durch die Doppelfunktion der Bohrung - nämlich die Aufnahme des dem Werkzeugwechsel dienenden Spreizzylinders und die Aufnahme des der Befestigung des Werkzeugträgers dienenden Spannelements - wird in erwünschter Weise eine weitere Verkleinerung des Werkzeugträgers erreicht.

- 4 -

Die entsprechend der Erfindung gestaltete Vorrichtung arbeitet wie folgt. Mehrere Werkzeugträger werden von Hand mit unterschiedlich gestalteten Schneidkörpern ausgerüstet und anschließend in die Plätze des Magazins gelegt. Der verfahrbare Spreizzylinder wird automatisch in die Bohrung eines Werkzeugträgers geführt und setzt den Werkzeugträger aus dem Magazin in den Werkzeughalter, der auf einer Werkzeugmaschine montiert ist. Der Werkzeugträger wird mit dem Werkzeughalter durch ein Spannelement fest verbunden, das ein automatisch gesteuertes Spannwerkzeug betätigt. Nach Durchführung des Arbeitsvorgangs wird die Verbindung zwischen dem Werkzeugträger und dem Werkzeughalter durch das Spannwerkzeug gelöst, der verfahrbare Spreizzylinder greift in die Bohrung des Werkzeugträgers ein und der Werkzeugträger wird in das Magazin zurückgesetzt. Danach kann der Werkzeughalter mit einem weiteren Werkzeugträger bestückt werden. Der Spreizzylinder besteht aus einem elastischen Balg, dessen Außendurchmesser durch Druckbeaufschlagung des Balginnenraums vergrößert wird und der in einem käfigartigen Körper angeordnet ist, welcher zumindest im Bereich der Balglängswand aus elastischem Material besteht und außerhalb der Balglängswand eine Einschnürung mit mehreren gegeneinander spreizbaren Haltefingern aufweist. Ein derartiger Spreizzylinder wurde in der deutschen Patentanmeldung P 31 27 209.6 vorgeschlagen. Die verschiedenen Schneidkörper, die auf den einzelnen Werkzeugträgern montiert sind, werden im Zerspanungsraum so angeordnet, daß ihre Schneidecken in einem gemeinsamen Einrichtungspunkt liegen.

Der Gegenstand der Erfindung wird nachfolgend anhand der Zeichnung näher erläutert. Es zeigen:

Fig. 1    Schematische Darstellung der erfindungs-

- 5 -

0075148

gemässen Vorrichtung,

Fig. 2    Werkzeughalter mit Werkzeugträger und
          Auflageplatte für den Schneidkörper
          sowie Auflagestück für den Werkzeugträger und Bohrung im Werkzeugträger,
          die den Spreizzylinder und das Spannelement aufnnimmt,

Fig. 3    Werkzeughalter mit Werkzeugträger und
          Bohrung im Werkzeugträger, die den Spreizzylinder und das Spannelement auf-nimmt,

Fig. 4 a  Werkzeughalter mit verschieden gestalteten
  - 4 c   Auflagestücken, die entsprechend den unterschiedlichen Schneidkörperformen gestaltet
          sind,

Fig. 5    Anordnung verschiedener Schneidkörper im
          Zerspanungsraum.

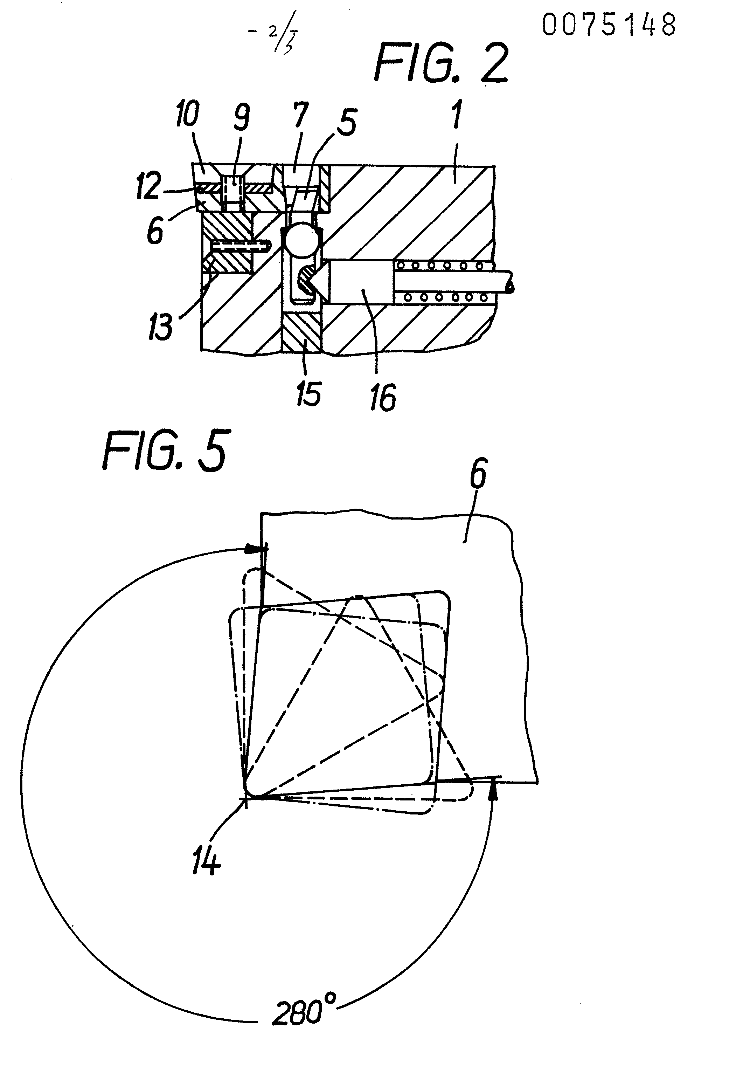

Der Werkzeughalter 1, der als Bohrstange oder als
Halter für Wendeschneidplatten ausgebildet sein kann,
ist mit seinem Schaft auf einer Werkzeugmaschine montiert. In der Ausnehmung 4 des Werkzeughalters 1 ist
der Werkzeugträger 6 angeordnet, der durch ein Spannelement 5 fest mit dem Werkzeughalter 1 verbunden wird.
Das Spannelement kann beispielsweise als Kniehebel (Fig.
3), Exzenterbolzen oder als zweiarmiger Hebel (Fig.2)
ausgebildet sein. Das Spannelement 5 wird mit einem
automatisch betätigten Spannwerkzeug festgezogen bzw.
gelöst, was über das Druckstück 16 geschehen kann.
Der Werkzeugträger 6 weist die Bohrung 7 auf, in die der Spreizzylinder 2 eingreift. Die Bohrung 7 kann auch das Spannelement 5 aufnehmen, wie es in den Figuren 2 und 3 dargestellt ist. In Fig. 2 wird das Spannelement 5 durch den Stopfen 15 gesichert, der den unteren Teil der Bohrung 7 verschließt.

In der Ausnehmung 8 des Werkzeugträgers 6 wird der Schneidkörper 10 durch das Spannglied 9 befestigt. Die Montage und der Wechsel der Schneidkörper 10 erfolgt manuell. Das Spanngleid 9 kann als Schraube oder als Klemmelement ausgebildet sein. Als Schneidkörper 10 werden Wendeschneidplatten verschiedener Form sowie Werkzeuge zum Bohren, Stechdrehen und Gewindedrehen verwendet. Die Schneidkörper 10 bestehen vorzugsweise aus Hartmetall, das aus einem Bindemetall und einem oder mehreren harten Metallcarbiden zusammengesetzt ist.

Um den Werkzeughalter 1 vor vorzeitigem Verschleiß zu schützen, kann in seiner Ausnehmung 4 das Auflagestück 13 angeordnet werden (Fig. 2), auf dem sich der Werkzeugträger 6 abstützt. Das Auflagestück 13 kann nach Verschleiß ausgewechselt werden, wodurch die Lebensdauer des Werkzeughalters 1 erheblich verlängert wird.

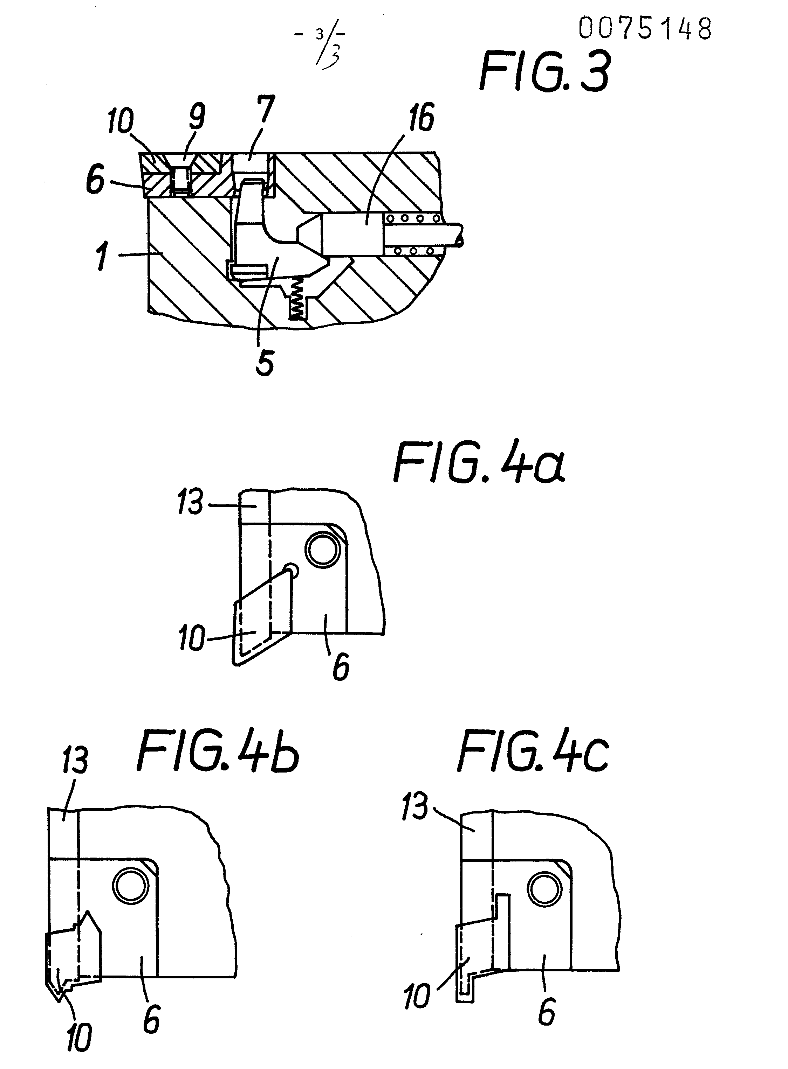

In den Figuren 4 a bis 4 c ist gezeigt, daß die Form des Auflagestücks 13 den unterschiedlichen Formen der Schneidkörper 10 in vorteilhafter Weise so angepaßt werden kann, daß eine optimale Stützung der Werkzeugträger 6 und der Schneidkörper 10 während der Bearbeitung der Werkstücke eintritt.

Der Verschleiß des Werkzeugträgers 6 kann dadurch vermindert werden, daß in seiner Ausnehmung 8 die Auflageplatte 12 montiert wird, auf der sich der Schneidkörper 10 abstützt. Auch die Auflageplatte 12 ist bei Verschleiß auszuwechseln. Die Auflageplatte 12 ist in Fig. 2 dargestellt.

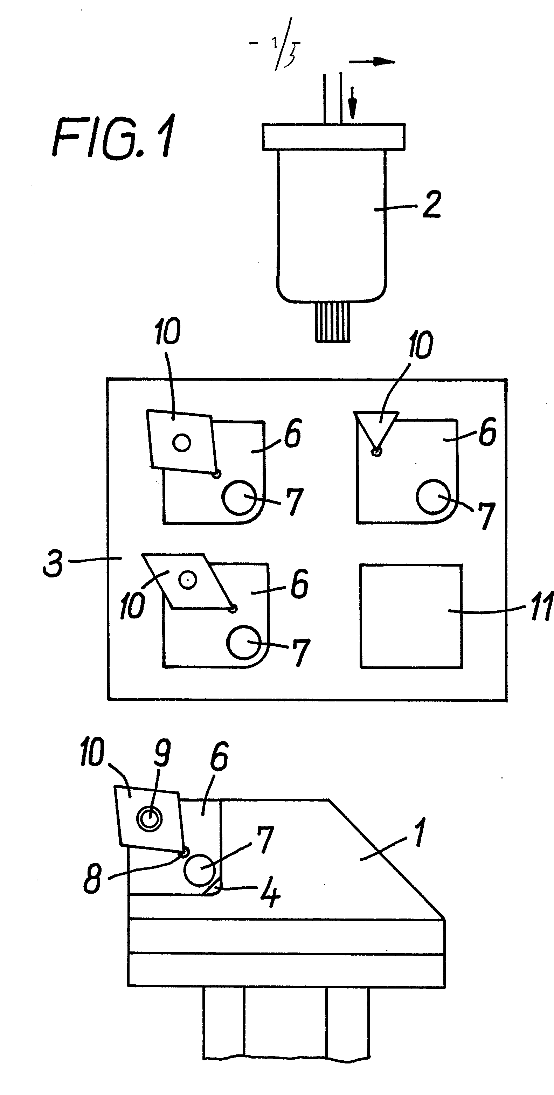

Im Magazin 3 sind mehrere Plätze 11 vorhanden, welche die Werkzeugträger 6 aufnehmen, die mit unterschiedlichen Schneidkörpern 10 ausgerüstet sind. Das Magazin 3 besitzt eine Kodierung und ist als Längs- oder Rundmagazin gestaltet. Der in alle Raumrichtungen verfahrbare Spreizzylinder 2 befördert und positioniert die mit den verschiedenen Schneidkörpern 10 ausgerüsteten Werkzeugträger 6. Der Spreizzylinder 2 wird automatisch gesteuert und pneumatisch oder hydraulisch betätigt. Die Funktionsweise der erfindungsgemässen Vorrichtung wird durch Fig. 1 veranschaulicht.

Beim Betrieb der erfindungsgemässen Vorrichtung ist es erforderlich, daß die unterschiedlich geformten und im Werkzeugträger 6 angeordneten Schneidkörper 10 im Zerspanungsraum so positioniert werden, daß sie mit ihren Schneidecken alle auf den Einrichtungspunkt 14 ausgerichtet sind, wie es in Fig. 5 für verschiedene Schneidkörperformen dargestellt ist. Der Einrichtungspunkt 14 ist der Bezugspunkt für die Programmierung der erfindungsgemässen Vorrichtung. Die Fig. 5 zeigt ferner, daß mit den verschiedenartig geformten Wendeschneidplatten ein Arbeitsbereich von 280 $^{\circ}$ im Zerspanungsraum überdeckt werden kann.

A n s p r ü c h e

1) Vorrichtung zur spanabhebenden Bearbeitung metallischer und nichtmetallischer Werkstücke, dadurch gekennzeichnet, daß sie aus einem Werkzeughalter (1), einem verfahrbaren Spreizzylinder (2) und einem Magazin (3) besteht, wobei in einer Ausnehmung (4) des Werkzeughalters (1) durch ein Spannelement (5) ein Werkzeugträger (6) befestigt ist, der eine zur Aufnahme des Spreizzylinders (2) bestimmte Bohrung (7) besitzt und in einer Ausnehmung (8) einen durch ein Spannglied (9) befestigten Schneidkörper (10) aufweist, und wobei das Magazin (3) mehrere Plätze (11) zur Aufnahme von Werkzeugträgern (6) hat, die jeweils mit einem Schneidkörper (10) ausgerüstet sind.

2) Vorrichtung nach Anspruch 1, dadurch gekennzeichnet, daß in der Ausnehmung (8) des Werkzeugträgers (6) eine Auflageplatte (12) angeordnet ist, auf der sich der Schneidkörper (10) abstützt.

3) Vorrichtung nach den Ansprüchen 1 und 2, dadurch gekennzeichnet, daß in der Ausnehmung (4) des Werkzeughalters (1) ein Auflagestück (13) angeordnet ist, auf dem sich der Werkzeugträger (6) abstützt.

4) Vorrichtung nach den Ansprüchen 1 bis 3, dadurch gekennzeichnet, daß in die zur Aufnahme des Spreizzylinders (2) bestimmte Bohrung (7) auch das der Befestigung des Werkzeugträgers (6) im Werkzeughalter (1) dienende Spannelement (5) eingreift.

FIG.1

0075148

0075148

# FIG. 2

# FIG. 5

280°

0075148

FIG. 3

FIG. 4a

FIG. 4b

FIG. 4c